# EUROPÄISCHE PATENTANMELDUNG

(11) **EP 4 344 098 A1**
(43) Veröffentlichungstag der Anmeldung: **27.03.2024**
(21) Anmeldenummer: 23191015.9
(22) Anmeldetag: 11.08.2023
(51) Int. Cl.: H04B 10/80

(54) **SIGNALÜBERTRAGUNGSSYSTEM ZUR ÜBERTRAGUNG EINER HAUPTPROZESSVARIABLEN UND WEITEREN DATEN ZWISCHEN EINEM FELDGERÄT UND EINER ÜBERGEORDNETEN EINHEIT SOWIE EIN ENTSPRECHENDES VERFAHREN**

(30) Priorität: 13.09.2022 DE 102022123352
(71) Anmelder: Turck Holding GmbH, 58553 Halver (DE)
(72) Erfinder: Bay, Arthur, 58849 Herscheid (DE); Seifert, Matthias, 44309 Dortmund (DE); Visser, Falko, 47445 Moers (DE); Pumpe, Stefan, 58332 Schwelm (DE); Schallenberg, Klaus, 51063 Köln (DE); Weinert, Hans-Christian, 58456 Witten (DE)
(74) Vertreter: DTS Patent- und Rechtsanwälte Schnekenbühl und Partner mbB

(57) **Zusammenfassung**

Die vorliegende Erfindung betrifft ein Signalübertragungssystem zur Übertragung einer Hauptprozessvariablen und weiterer Daten zwischen einem Feldgerät und einer übergeordneten Einheit, umfassend eine erste Konvertierungsanordnung, eine zweite Konvertierungsanordnung und eine Optokoppleranordnung (10, 10a, 10b), die zwischen der ersten Konvertierungsanordnung und der zweiten Konvertierungsanordnung geschaltet ist, wobei die erste Konvertierungsanordnung dazu eingerichtet ist, zumindest die zwischen dem Feldgerät und der übergeordneten Einheit ausgetauschten weiteren Daten in ein Datensignal derart zu konvertieren, dass sie über die Optokoppleranordnung (10, 10a, 10b) übertragen werden können; wobei die Optokoppleranordnung (10, 10a, 10b) eingerichtet ist, das Datensignal zwischen der ersten Konvertierungsanordnung und der zweiten Konvertierungsanordnung zu übertragen; und wobei die zweite Konvertierungsanordnung dazu eingerichtet ist, das Datensignal zu den zwischen dem Feldgerät und der übergeordneten Einheit ausgetauschten weiteren Daten zu konvertieren und an das Feldgerät zu übertragen. Zudem betrifft die Erfindung ein Verfahren zur Übertragung einer Hauptprozessvariablen und weiterer Daten zwischen einem Feldgerät und einer übergeordneten Einheit.

## Beschreibung

Die vorliegende Erfindung bezieht sich auf das Feld der Prozessautomatisierungstechnik. Dort werden Feldgeräte eingesetzt, die mit einer übergeordneten Einheit verbunden sind. Solche Feldgeräte dienen allgemein zur Erfassung und/oder der Beeinflussung von Prozessvariablen. Solche Feldgeräte sind allgemein bekannt.

Die Signalübertragung zwischen den Feldgeräten und der übergeordneten Einheit erfolgt häufig nach dem 4 - 20 mA-Standard. Beispielsweise werden die Messwerte von Sensoren, die ein Beispiel für Feldgeräte sind, als 4 - 20 mA Stromsignal über eine Zwei-Leiterprozessregelschleife an die übergeordnete Einheit übertragen. Jedenfalls findet die Übertragung der Hauptprozessvariablen im Stand der Technik in analoger Weise über den 4 - 20 mA-Standard statt.

Über diese Zwei-Leiterprozessregelschleife werden üblicherweise zudem digitale Signale nach dem so genannten HART-Standard (HART-Signale) übertragen. Beispielsweise werden so die anderen Daten zur Kommunikation, die nicht die Mess- beziehungsweise Stellwerte (Hauptprozessvariablen) sind, über das so genannte HART-Protokoll übertragen. Diese anderen Daten sind nachfolgend als "weitere Daten" bezeichnet. Gemäß dem HART-Protokoll wird zwischen 1.200 Hz und 2.200 Hz zur Datenübertragung umgeschaltet, wobei für die niedrige Frequenz eine logische 1 und die höhere Frequenz eine logische 0 steht.

Auf diese Weise bleibt das sich nur langsam verändernde analoge Stromsignal von der Frequenzüberlagerung unberührt, so dass bei dieser Ausgestaltung analoge und digitale Kommunikation vereint sind.

Relevanter Stand der Technik in diesem Feld ist in der DE 10 2020 105 605 A1, der DE 10 2006 055 396 A1 sowie der DE 20 2015 004 127 U1 beschrieben.

Im Stand der Technik gibt es verschiedene Lösungen zur Übertragung des HART-Signals zwischen einem Feldgerät und einer übergeordneten Einheit. Dabei sind üblicherweise ein Master- und zumindest ein Slave-Gerät vorgesehen.

Beispielsweise kann das HART-Signal über einen Trafo übertragen werden. Um die Feldgerätseite galvanisch von der Seite der übergeordneten Einheit zu trennen, wird das HART-Signal über eine in Reihe geschaltete Regelung mittels eines HART-Trafos ausgekoppelt und auf der anderen Seite wieder über die Sekundärentwicklung des HART-Trafos eingekoppelt.

Dabei bleibt die galvanische Trennung komplett erhalten und die Kommunikation funktioniert sowohl vom Master zum Slave als auch vom Slave zum Master. Diese Lösung hat einen hohen Platzbedarf.

Zur Lösung des vorbeschriebenen Problems schlägt die vorliegende Erfindung ein Signalübertragungssystem mit den Merkmalen von Anspruch 1 vor. Dieses zeichnet sich insbesondere dadurch aus, dass eine Optokoppleranordnung zur Übertragung des Datensignals verwendet wird.

Das Signalübertragungssystem zur Übertragung einer Hauptprozessvariablen und weiterer Daten zwischen einem Feldgerät und einer übergeordneten Einheit umfasst eine erste Konvertierungsanordnung, eine zweite Konvertierungsanordnung und eine Optokoppleranordnung. Dabei ist die Optokoppleranordnung zwischen der ersten Konvertierungsanordnung und der zweiten Konvertierungsanordnung geschaltet. Die erste Konvertierungsanordnung ist dazu eingerichtet, zumindest die zwischen dem Feldgerät und der übergeordneten Einheit ausgetauschten weiteren Daten in ein Datensignal derart zu konvertieren, dass sie über die Optokoppleranordnung übertragen werden können. Die Optokoppleranordnung ist eingerichtet, das Datensignal zwischen der ersten Konvertierungsanordnung und der zweiten Konvertierungsanordnung zu übertragen. Dabei ist die zweite Konvertierungsanordnung dazu eingerichtet, das Datensignal zu den zwischen dem Feldgerät und der übergeordneten Einheit ausgetauschten weiteren Daten zu konvertieren und an das Feldgerät zu übertragen.

In anderen Worten wird zwischen einem Feldgerät und einer übergeordneten Einheit eine Hauptprozessvariable, wie zum Beispiel Mess- und Stellwerte sowie weitere Daten (beispielsweise Kommunikationsdaten) ausgetauscht. Vorliegend werden zumindest diese weiteren Daten zuerst in einer ersten Konvertierungsanordnung konvertiert, so dass ein Datensignal generiert wird, das in einer Optokoppleranordnung eingespeist werden kann. In dieser Optokoppleranordnung wird das Signal dann optisch digital übertragen. In einer zweiten Konvertierungsanordnung wird dieses über die Optokoppleranordnung übertragene Datensignal dann wieder rückkonvertiert.

Die Verwendung solcher Optokoppleranordnungen ersetzt insbesondere den zuvor beschriebenen Übertragungsweg mittels eines HART-Trafos. So kann eine galvanische Trennung erreicht werden, bei der dennoch eine hohe Messgenauigkeit erreicht wird.

Ein Optokoppler oder auch Optoisolator genannt ist ein Halbleiterbauteil. Es verwendet einen kurzen optischen Übertragungsweg, um ein elektrisches Signal zwischen Schaltungen oder Elementen einer Schaltung zu übertragen. Elektrisch sind die beiden Elemente allerdings voneinander isoliert, das heißt galvanisch getrennt.

Ein solcher Optokoppler weist üblicherweise eine Leuchtdiode beziehungsweise Laserdiode als optischen Sender und eine Photodiode beziehungsweise einen Phototransistor als optischen Empfänger auf. Der Sender und Empfänger sind insbesondere untereinander optisch gekoppelt in einem von außen lichtundurchlässigen Gehäuse untergebracht.

In dem Signalübertragungssystem, welches zwischen dem entsprechenden Feldgerät und der übergeordneten Einheit vorgesehen ist, ist eine Optokoppleranordnung integriert. Diese Optokoppleranordnung ist zwischen einer ersten Konvertierungsanordnung und einer zweiten Konvertierungsanordnung vorgesehen, in welcher die entsprechenden Signale von dem Feldgerät beziehungsweise der übergeordneten Einheit konvertiert werden können.

Gemäß einer Weiterbildung der Erfindung weisen die weiteren Daten Feldgeräteingangsdaten auf. Die Feldgeräteingangsdaten sind Daten, die von der übergeordneten Einheit an das Feldgerät gesendet werden. Die weiteren Daten können zudem oder alternativ Feldgerätausgangsdaten sein, die von dem Feldgerät an die übergeordnete Einheit übertragen werden.

Die weiteren Daten, die somit keine Daten der Hauptprozessvariablen beinhalten, sind zum Beispiel Mess- beziehungsweise Stellwerte. Die weiteren Daten sind insbesondere Daten, über die die Kommunikation zwischen der übergeordneten Einheit und den Feldgeräten stattfindet.

Diese weiteren Daten können Feldgeräteingangsdaten und/oder Feldgerätausgangsdaten sein. Diese Daten werden in unterschiedlichen Richtungen zwischen Feldgerät und übergeordneter Einheit beziehungsweise zwischen übergeordneter Einheit und Feldgerät ausgetauscht. Diese Daten können in der Optokoppleranordnung und somit über die galvanische Trennung hinweg in dem Signalübertragungssystem übertragen werden.

Es hat sich als vorteilhaft herausgestellt, dass die weiteren Daten im HART-Standard übertragen werden. Insbesondere erfolgt die Übertragung an die Optokoppleranordnung beziehungsweise die Ausgabe durch die Optokoppleranordnung mittels des HART-Standards. Der HART-Standard ist allgemein für die Prozesstechnik bekannt. Der HART-Standard und die entsprechenden Spezifikationen sind durch diesen Verweis in die Offenbarung der vorliegenden Anmeldung mit aufgenommen. Die HART-Daten sind digitale Daten, die dann in der Optokoppleranordnung galvanisch getrennt zwischen einem Teil des Signalübertragungssystems, das dem Feldgerät zugeordnet ist und einem Teil des Signalübertragungssystems, das der übergeordneten Einheit zugeordnet ist, übertragen werden können.

Insbesondere wird dabei die übergeordnete Einheit als HART-Master-Gerät betrieben. Ferner wird insbesondere das Feldgerät als HART-Slave-Gerät betrieben. Die Erfindung ermöglicht entsprechend eine Kommunikation sowohl vom Master zum Slave, als auch umgekehrt vom Slave zu Master.

Bei der Kommunikation gemäß dem HART-Standard erfolgt insbesondere eine Übertragung von Anfragetelegrammen vom Master zum Slave beziehungsweise von Antworttelegramme vom Slave zum Master.

Gemäß einer vorteilhaften Weiterbildung der Erfindung weist die erste Konvertierungseinrichtung ein erstes HART-Modem auf. Dieses erste HART-Modem ist dazu eingerichtet, vom Feldgerät ein Feldgeräteingangssignal zu empfangen und einen sogenannten HART-Datenteil aus dem Feldgeräteingangssignal herauszufiltern. Dieses Feldgeräteingangssignal ist insbesondere das Signal, welches die Hauptprozessvariablen und die weiteren Daten, im vorliegenden Fall die weiteren Daten im HART-Standard, aufweist.

In dem ersten HART-Modem wird der herausgefilterte HART-Datenteil als Datensignal über die Optokoppleranordnung an die zweite Konvertierungseinrichtung geleitet.

Die zweite Konvertierungseinrichtung weist bei dieser Weiterbildung ein zweites HART-Modem auf. Dort wird das Datensignal (der im ersten HART-Modem konvertierte HART-Datenteil) wieder zu den weiteren Daten im HART-Standard konvertiert. Das heißt, die eingangs in das erste HART-Modem eingegebenen HART-Daten kommen dann wieder aus dem HART-Modem auf der Seite der übergeordneten Einheit heraus.

Das zweite HART-Modem ist dazu eingerichtet, den von dem ersten HART Modem herausgefilterten HART-Datenteil nach seiner Konvertierung zu den weiteren Daten im HART-Standard in als übergeordnetes Einheitsausgangssignal auszugeben, welches von dem Signalübertragungssystem an die übergeordnete Einheit ausgegeben wird. Das heißt, diese weiteren Daten im HART-Standard können dann in einem übergeordneten Einheitsausgangssignal ausgegeben werden, welches von dem Signalübertragungssystem an die übergeordnete Einheit ausgegeben wird.

Dieses übergeordnete Einheitsausgangssignal (das heißt das von der Signalübertragungssystem an die übergeordnete Einheit ausgegebene Signal) kann dann lediglich den HART-Datenteil enthalten oder aber auch wieder mit den Hauptprozessvariablen aus dem Feldgeräteeingangssignal zusammengeführt werden.

Die Datenflussrichtung von dem ersten HART-Modem über den Optokoppler zum zweiten HART-Modem wurde zuvor beschrieben. Gleichsam kann die Datenflussrichtung auch in die andere Richtung gehen zwischen dem zweiten HART-Modem und dem ersten HART-Modem.

Hierfür weist die zweite Konvertierungseinheit das zweite HART-Modem auf. Dieses ist dazu eingerichtet, von der übergeordneten Einheit ein übergeordnetes Einheitseingangssignal zu empfangen. Dieses im HART-Datenteil vom übergeordneten Einheitseingangssignal auf dieses übergeordnete Einheitseingangssignal ist insbesondere ein Signal, welches von der übergeordneten Einheit kommt und welches die Hauptprozessvariablen und weitere Daten im HART-Standard umfasst.

Das zweite HART-Modem filtert von dem empfangenen übergeordneten Einheitseingangssignal den HART Datenteil heraus. Das zweite HART-Modem leitet dieses herausgefilterte Signal als Datensignal über die Optokoppleranordung an die erste Konvertierungsanordnung.

Dieses Datensignal wird über die Optokoppleranordnung an die erste Konvertierungsanordnung weitergeleitet und dort in dem ersten HART-Modem wieder konvertiert und der entsprechende HART-Datenteil wird dann in einem Feldgerätausgangssignal ausgegeben. Dieses kann lediglich den HART-Datenteil enthalten oder aber auch wieder mit den Hauptprozessvariablen zusammengeführt werden.

Auch wenn die Daten aus Hauptprozessvariablen und weiteren Daten vorliegend zwischen dem Feldgerät und dem Signalübertragungssystem zusammengeführt sind und in dem Signalübertragungssystem aufgespalten werden und zwischen dem Signalübertragungssystem und der übergeordneten Einheit wieder zusammengeführt sind, muss dies nicht der Fall sein. Es können die entsprechenden Daten (Hauptprozessvariablen und weitere Daten) auch voneinander separiert weitergeführt werden (auf einer oder auf beiden Seiten).

Jedenfalls werden zumindest die weiteren Daten über den Optokoppler übertragen.

Die Hauptprozessvariablen, die beispielsweise mittels eines analogen Signals übertragen werden, müssen nicht über einen solchen Optokoppler übertragen werden und können auf jede Art und Weise übertragen werden.

Anstelle der weiteren Daten können auch umgekehrt lediglich die Hauptprozessvariablen mittels des Optokopplers übertragen werden. Diese Ausgestaltung kann auch für sich eine Erfindung bilden.

Gemäß einer vorteilhaften Weiterbildung der Erfindung weist die jeweilige Konvertierungsanordnung (erste beziehungsweise zweite Konvertierungsanordnung) jeweils eine Signalverarbeitungseinheit auf. Diese Signalverarbeitungseinheit ist jeweils zwischen dem entsprechenden HART-Modem und der Optokoppleranordnung vorgesehen.

Somit kann eine erste Signalverarbeitungseinheit zwischen dem ersten HART-Modem und dem feldgerätseitigen Eingang der Optokoppleranordnung vorgesehen sein und es kann eine zweite Signalverarbeitungseinheit zwischen der der übergeordneten Einheit zugeordneten Seite des Optokopplers und dem zweiten HART-Modem vorgesehen sein. Die Signalverarbeitungseinheit wandelt die entsprechenden Signale, die von dem HART-Modem erhalten werden oder zu diesem geschickt werden, jeweils in Signale um, die mittels der Optokoppleranordnung übertragen werden können.

Vorteilhafterweise wandelt das entsprechende HART-Modem den HART-Datenteil zuerst in ein TLL-Signal um und übergibt dieses dann der Signalverarbeitungseinheit. Dort wird das TLL-Signal in ein optokopplergerechtes Signal umgewandelt. Gleichzeitig wandelt auch die entsprechende Signalverarbeitungseinheit jeweils ein von der Optokoppleranordnung kommendes Signal in ein entsprechendes TLL-Signal um.

Gemäß einer weiteren vorteilhaften Ausgestaltung greift das erste HART-Modem den HART-Datenteil von dem Feldgeräteingangssignal, welches von dem Feldgerät kommend empfangen wird, über eine erste Kondensatoranordnung ab. Gleichfalls kann auch der HART-Datenteil, der über die Optokoppleranordnung übertragen worden ist, über diese erste Kondensatoranordnung abgegeben werden, um das Feldgerätausgangssignal zu bilden.

Die gleiche Ausgestaltung kann zusätzlich oder alternativ auch das zweite HART-Modem haben. Der HART-Datenteil des übergeordneten Eingangseinheitssignals, welches von der übergeordneten Einheit kommend empfangen wird, wird über eine zweite Kondensatoranordnung abgegriffen. Der HART-Datenteil, der von dem Optokoppler in das zweite HART-Modem kommt, wird über die zweite Kondensatoranordnung abgegeben und bildet das übergeordnete Einheitsausgangssignal.

Gemäß einer vorteilhaften Weiterbildung der Erfindung werden die Hauptprozessvariablen zwischen dem Feldgerät und der übergeordneten Einheit im Wesentlichen als analoges Signal übertragen. Im Bereich des Signalübertragungssystems kann dieses analoge Signal in ein digitales Signal konvertiert werden und dann, nachdem es über das Signalübertragungssystem übertagen worden ist, wieder zu dem analogen Signal umgewandelt werden.

Es ist aber auch möglich, dass in das Signalübertragungssystem auf der einen Seite ein analoges (Hauptprozessvariablen-) Signal eingeführt wird und dieses auf der anderen Seite als digitales Signal ausgeführt wird.

Die entsprechend weiter unten beschriebenen Module können somit entsprechende Ein- beziehungsweise Ausgänge (Stecker) aufweisen, wo direkt die Leitungen für das digitale oder das analoge Signal der Hauptprozessvariablen abgegriffen werden können. Somit kann mit demselben Signalübertragungssystem ein variabler Anschluss erreicht werden.

Insbesondere weist die erste Konvertierungseinrichtung einen A/D-Umsetzer auf, mittels welchem das analoge (Hauptprozessvariablen-)Signal, welches von Feldgeräten kommt, in ein digitales Hauptprozessvariablensignal umgewandelt wird. Dieses digitale Hauptprozessvariablensignal wird innerhalb des Signalübertragungssystems verwendet und über die Optokoppleranordnung übertragen.

Die zweite Konvertierungseinrichtung kann einen entsprechenden D/A-Umsetzer aufweisen. Mittels diesem wird das innerhalb der Signalübertragungssysteme verwendeten digitalen Hauptprozessvariablensignal wieder in das analoge Signal umgewandelt.

Der A/D-Umsetzer ist vorzugsweise parallel zu dem ersten HART-Modem vorgesehen. Die in dem A/D-Umsetzer generierten digitalen Hauptprozessvariablensignale werden dann an die Signalverarbeitungseinheit der ersten Konvertierungsanordnung übertragen. Parallel dazu werden auch zwischen dem HART-Modem der HART-Datenteil an die Signalverarbeitungseinheit der ersten Konvertierungseinrichtung übertragen. Von dort werden dann die verarbeiteten digitalen Hauptprozessvariablensignale und der verarbeitete HART-Datenteil zwischen der Signalverarbeitungseinheit der ersten Konvertierungseinheit und der Optokoppleranordnung übertragen.

Nach Durchlaufen der Optokoppleranordnung kann zusätzlich oder alternativ wieder eine entsprechende Signalverarbeitungseinheit in der zweiten Konvertierungsanordnung vorgesehen sein. Dort werden die entsprechenden verarbeiteten digitalen Hauptprozessvariablensignale und verarbeiteten HART-Datenteile wieder zurück zu dem HART-Datenteil beziehungsweise der digitalen Hauptprozessvariablensignal verarbeitet und dann entsprechend in den D/A-Umsetzer beziehungsweise das zweite HART-Modem geführt, die wieder für sich parallel zueinander angeschlossen sind.

Die Optokoppleranordnung kann zwei oder mehrere Optokoppler (Optokopplereinheiten) aufweisen. Jede Optokopplereinheit kann für sich eine Leuchtdiode beziehungsweise Laserdiode als optischen Sender und eine Photodiode, beziehungsweise einen Phototransistor als optischen Empfänger aufweisen.

Zum einen kann die Optokoppleranordnung einen HART-DatenteilübertragungsOptokoppler zur Übertragung des in der Signalverarbeitungseinheit verarbeiteten HART-Datenteil aufweisen. Zusätzlich oder alternativ kann die Optokoppleranordnung einen Hauptprozessvariablenübertragungs-Optokoppler zur Übertragung der in der Signalverarbeitungseinheit verarbeiteten digitalen Hauptprozessvariablen aufweisen.

Zusätzlich oder alternativ kann die Optokoppleranordnung für jede Übertragungsrichtung zwischen Feldgerät und der übergeordneten Einheit einen separaten Optokoppler aufweisen, das heißt für die Übertragung von übergeordneter Einheit zum Feldgerät wird ein Optokoppler verwendet und für die Übertragung zwischen Feldgerät und übergeordneter Einheit wird ein anderer Optokoppler verwendet.

Soweit der HART-Datenteil und die Hauptprozessvariablen in zwei Richtungen übertragen werden, sind somit zum Beispiel vier Optokoppler vorgesehen.

Gemäß einer vorteilhaften Ausgestaltung können auch über einen einzelnen Optokoppler der verarbeitete HART-Datenteil sowie die verarbeitete digitale Hauptprozessvariable übertragen werden. Es kann somit ein Optokoppler für beide Datenaspekte (HART-Datenteil und verarbeitende Digitalhauptprozessorvariable) vorgesehen sein.

Es können zum Beispiel zwei oder vier Optokopplereinrichtungen in der Optokoppleranordnung vorgesehen sein.

Alternativ zu der vorgenannten Ausgestaltung, bei der die Hauptprozessvariable zwischen dem Feldgerät und dem Signalübertragungssystem beziehungsweise zwischen der übergeordneten Einheit und dem Übertragungssystem in analoger Form übertragen werden, können die Hauptprozessvariablen auch in digitaler Form zwischen dem Feldgerät und dem Signalübertragungssystem beziehungsweise zwischen der übergeordneten Einheit und dem Übertragungssystem übertragen werden.

Hierzu gibt es im Stand der Technik auch schon bekannte Feldgeräte beziehungsweise übergeordnete Übertragungseinrichtungen, die solche digitalen Daten verarbeiten können.

Um ein möglichst vielseitiges System zu haben, weist zum Beispiel das Signalübertragungssystem vorteilhafterweise jeweils für beide Situationen Eingänge auf, die die entsprechenden Hauptprozessvariablen entweder in analoger beziehungsweise in digitaler Form empfangen.

Es hat sich als besonders vorteilhaft herausgestellt, dass das Signalübertragungssystem als Signalübertragungseinheit ausgebildet ist, die eine Backplane aufweist, in der entsprechende eigenständige Module austauschbar eingesteckt werden können. Diese Backplane und diese Module sind beispielsweise in einer an sich bekannten Art aufgebaut. In der Backplane werden die entsprechenden Leitungen für die weitere Datenübertragung beziehungsweise die Übertragung der Hauptprozessvariablen und auch die Spannungsversorgung geführt.

Die zuvor beschriebene erste Konvertierungsanordnung, zweite Konvertierungsanordnung und Optokoppleranordnung können für sich jeweils als eigenständiges Modul ausgeführt sein. Durch Einsetzen der entsprechenden Module in die entsprechenden Steckplätze, werden die entsprechenden Verbindungen für den entsprechenden Datenfluss hergestellt.

Die Konvertierungsanordnung kann jeweils für sich nochmal in ein, zwei oder mehrere Module unterteilt sein. So kann zum Beispiel jede der ersten und/oder zweiten Konvertierungsanordnung jeweils ein Signalverarbeitungsmodul und ein Transformationsmodul enthalten. Im Signalverarbeitungsmodul befindet sich die Signalverarbeitungsfunktionalität zur Signalverarbeitung, zu Signalen, die über die Optokoppleranordnung übertragen werden können. In dem Transformationsmodul befinden sich dementsprechend die Elemente, wie beispielsweise das HART-Modem, in dem die entsprechenden HART-Daten abgetrennt werden. In diesem Transformationsmodul findet eine Führung der hauptprozessvariablen Signale und der entsprechenden weiteren Daten statt.

Zumindest diese Module können unterschiedliche Steckerbelegungen aufweisen. Durch Verbindung der Backplane können dann an der Backplane vorgesehene Steckverbindungen die entsprechenden Signale abgegriffen werden und zu dem entsprechenden Feldgerät beziehungsweise der übergeordneten Einheit geführt werden.

Insbesondere sind die erste Konvertierungsanordnung und die zweite Konvertierungsanordnung galvanisch voneinander getrennt.

Die erste Konvertierungseinrichtung und die zweite Konvertierungseinrichtung und zusätzlich auch die Optokopplereinrichtung können über eine gemeinsame Leistungsversorgung mit Leistung versorgt werden.

Das Signalübertragungssystem kann entlang der galvanischen Trennung in Richtung der Datenübertragung zwischen den Feldgeräten der übergeordneten Einheit im Wesentlichen in elektrischer Hinsicht spiegelsymmetrisch aufgebaut sein. Insbesondere ist das System als eigensicheres System konfiguriert.

Ex1 ist ein Fachbegriff für einen Bereich, in dem damit zu rechnen ist, dass eine explosionsfähige Atmosphäre aus einem Gemisch von Luft mit brennbaren Substanzen in Form von Gas, Dampf oder Nebel bei normalem Betrieb auftritt. Ein als System für den eigensicheren Betrieb oder für den Einsatz in einer Ex-Zone 1 genügt insbesondere den gesetzlichen Vorschriften für Geräte, die in einer solchen Umgebung eingesetzt werden. Insbesondere ist ein "eigensicherer" Betrieb vorgesehen, bei dem eine Entwicklung von Funken ausgeschlossen ist, die eine Explosion auslösen könnten.

Gemäß einem weiteren nebengeordneten Aspekt der Erfindung wird ein Verfahren zur Übertragung einer Hauptprozessvariablen und weiteren Daten zwischen einem Feldgerät und einer übergeordneten Einheit angegeben. Das Verfahren weist die Merkmale von Anspruch 20 auf.

Die zuvor genannten Vorrichtungsmerkmale und einzelnen Aspekte können auch in verfahrensmäßiger Form für das entsprechende Verfahren verwendet werden.

Auch wenn vorliegend in Anspruch 1 beschrieben ist, dass zumindest die weiteren Daten über die Optokopplereinrichtung transferiert werden können, können auch alleine die Hauptprozessvariablen über eine solche Optokopplereinrichtung transferiert werden.

Auch wenn in Anspruch 1 die erste Konvertierungsanordnung und die zweite Konvertierungsanordnung beschrieben sind, sind diese nicht erfindungswesentlich.

Es kann auch für sich eine Optokoppleranordnung zur Verwendung in dem oben genannten Signalübertragungssystem unter Schutz gestellt werden beziehungsweise auch die zuvor genannten Module zur Verwendung und Einsteckung in einer zuvor beschriebenen Backplane.

Vorteilhafte Weiterbildungen der Erfindung werden anhand der nachfolgenden Zeichnung beschrieben. In dieser zeigen:
- Fig. 1: eine schematische Darstellung eines erfindungsgemäßen Signalübertragungssystems;
- Fig. 2a: den in Fig. 1 mit IIIa bezeichneten Teil des Systems;
- Fig. 2b: den in Fig. 1 mit IIIb bezeichneten Teil des Systems;
- Fig. 3: den in Fig. 1 mit IV bezeichneten Teil des Systems;
- Fig. 4: den in Fig. 1 mit V bezeichneten Teil des Systems;
- Fig. 5: den in Fig. 1 mit VI bezeichneten Teil des Systems;
- Fig. 6: den in Fig. 1 mit VII bezeichneten Teil des Systems; und
- Fig. 7: den in Fig. 1 mit VIII bezeichneten Teil des Systems.

Nachfolgend sind in den Figuren einige elektrotechnische Standardsymbole aufgeführt.

Diese Zeichen für Widerstände, Spulen/Impedanzen, Transistoren und sonstigen aus der Schaltungstechnik bekannten Systeme sind allgemein bekannt und der Fachmann wird allein anhand dieser Zeichen die Funktionsweise des erfindungsgemäßen Systems verstehen. Die Offenbarung ist nicht auf die speziellen Elemente beschränkt. Soweit dieselbe Funktion auch mit einer anderen Abfolge von elektronischen Komponenten erreicht werden kann, kann diese ebenso verwendet werden.

Im Folgenden sind nur die wichtigsten Punkte der Erfindung beschrieben. Gleichwohl versteht der zuständige Fachmann die entsprechenden schematischen Figuren zu lesen und erkennt somit die Funktion des Datenaustausches beziehungsweise Leistungsflusses in den entsprechenden Einheiten. Wo es in elektrotechnischer Hinsicht sinnvoll ist, können auch Teile der entsprechenden speziellen Ausgestaltung weggelassen werden.

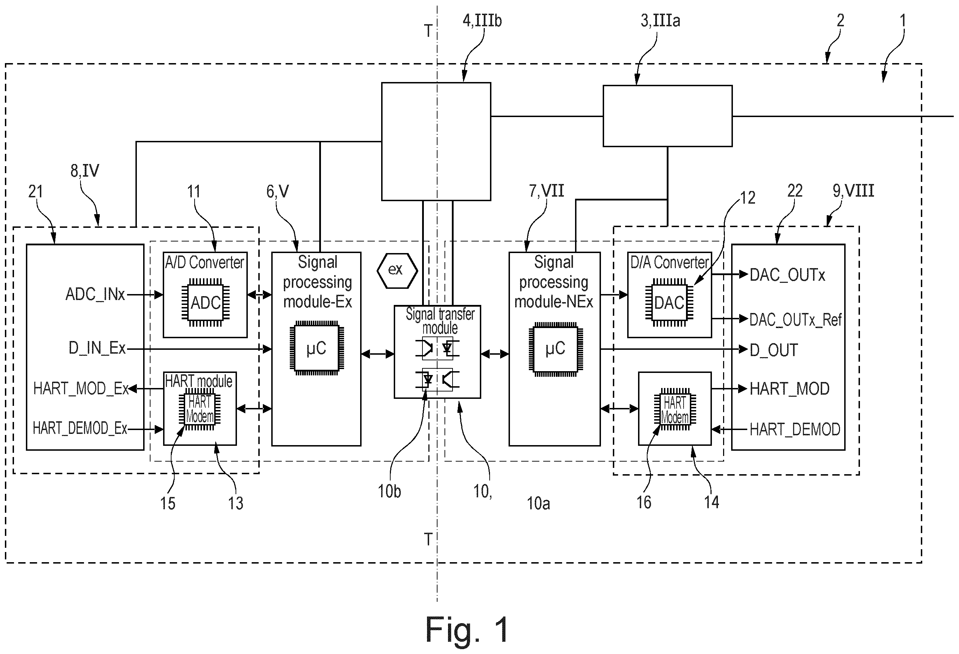

Das in Fig. 1 dargestellte System ist beispielsweise eine Signalübertragungseinheit 1, die ein Gehäuse 2 aufweist. In dem Gehäuse 2 ist eine nicht dargestellte Backplane vorgesehen. Auf dieser Backplane können verschiedene Module vorgesehen sein. Mit Bezugszeichen 3 ist ein Leistungsversorgungsmodul bezeichnet, mit Bezugszeichen 4 ein Leistungstransfermodul, mit Bezugszeichen 10 ein Optokopplermodul, mit Bezugszeichen 6 ein erstes Signalverarbeitungsmodul, mit Bezugszeichen 7 ein zweites Signalverarbeitungsmodul, mit Bezugszeichen 8 ein erstes Transformationsmodul und mit Bezugszeichen 9 ein zweites Transformationsmodul.

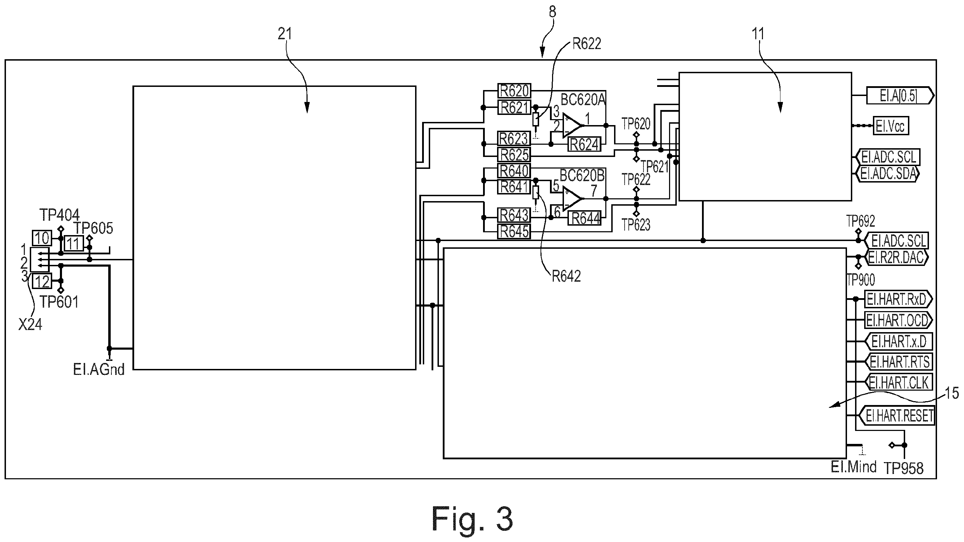

Durch das Leistungsversorgungsmodul 3 werden die entsprechenden weiteren Module mit Spannung versorgt. Die Spannung wird über das Leistungstransfermodul 4, das in Bezug auf Fig. 3b näher beschrieben ist, über die galvanische Trennung T hinweg den entsprechenden weiteren Modulen zugeführt, hier einem ersten Signalverarbeitungsmodul 6, einem ersten Transformationsmodul 8, einem zweiten Signalverarbeitungsmodul 7 und einem zweiten Transformationsmodul 9.

Auf der in Fig. 1 links dargestellten Seite sind das erste Transformationsmodul 8 und das erste Signalverarbeitungsmodul 6 gezeigt, gespiegelt dazu an der galvanischen Trennung T (siehe schematische gestrichelte Linie), die durch das Optokopplermodul 10 verläuft, sind das zweite Transformationsmodul 9 und das zweite Signalverarbeitungsmodul 7 vorgesehen.

In dem Optokopplermodul 10 werden die weiter unten beschriebenen Datensignale übertragen.

Fig. 1 zeigt dabei den Aufbau des Systems verallgemeinert und eher schematisch. Es ist nicht als exaktes Schaltbild zu verstehen.

Mit Bezugszeichen 10 ist eine Optokoppleranordnung vorgesehen. Die Elemente der Optokoppleranordnung 10 müssen nicht in einem gemeinsamen Modul vorgesehen sein, selbst wenn dies bei einer spezifischen Ausführung der Fall sein kann. Schematisch sind innerhalb der Optokoppleranordnung 10 zwei Optokoppler, die mit 10a und 10b bezeichnet sind, gezeigt.

Dort ist auch das gängige elektronische Symbol für einen Optokoppler verwendet, das Sender- und Empfängereinheiten darstellt.

Der mit Bezugszeichen 10a beschriebene Optokoppler weist auf der in Fig. 1 dargestellten rechten Seite eine Leuchtiode und auf der linken Seite einen Photosensor auf, sodass die Daten beispielsweise hier von rechts nach links übertragen werden. Ein umgekehrter Aufbau ist bei dem mit Bezugszeichen 10b bezeichneten Optokoppler vorgesehen: Dort sind eine Leuchtiode auf der linken Seite und ein Photosensor auf der rechten Seite dargestellt, sodass dort ein Datentransfer von links nach rechts stattfindet.

Die in Fig. 1 dargestellte linke Seite entspricht der einem Feldgerät zugeordneten Seite des Signalübertragungssystems, insbesondere in einem explosionsgefährdeten Bereich, die rechte Seite entspricht der einer übergeordneten Einheit zugewandten Seite des Signalübertragungssystems, insbesondere außerhalb des explosionsgefährdeten Bereichs.

Das erste beziehungsweise zweite Signalverarbeitungsmodul ist mit Bezugszeichen 6 und 7 bezeichnet. Dort ist schematisch ein Mikrocomputer mit µC bezeichnet.

Gleichwohl hier ein modulartiger Aufbau beschrieben ist, kann auch eine andere Signalverarbeitungsanordnung vorgesehen sein, solange diese die entsprechenden Signalverarbeitungsschritte zulässt.

In den Signalverarbeitungsmodulen werden die entsprechenden Signale von den Optokopplern 10a, 10b wieder in die entsprechenden Signale zurückkonvertiert, die dann ausgangsseitig über die entsprechenden DA/AD-Umsetzer beziehungsweise die HART-Module an das nicht dargestellte Feldgerät beziehungsweise an die übergeordnete Einheit übertragen werden können.

Auf der dem Feldgerät zugewandten Seite ist mit Bezugszeichen 11 ein A/D-Umsetzer dargestellt und auf der der übergeordneten Einheit zugewandten Seite ist mit Bezugszeichen 12 ein D/A-Umsetzer dargestellt. Über den A/D-Umsetzer 11 kann ein von dem Feldgerät kommendes analoges Signal, welches beispielsweise die Hauptprozessvariable enthält, in ein digitales Signal umgewandelt werden. Dieses digitale Signal wird dann in dem ersten Signalverarbeitungsmodul 6 in ein Signal umgewandelt, das in der Optokoppleranordnung 10 übertragen werden kann. Von der Optokoppleranordnung 10 wird dieses dann an das zweite Signalverarbeitungsmodul 7 übertragen und dort wieder in ein entsprechendes digitales Signal rückumgewandelt, das dann in dem D/A-Umsetzer 12 wieder in das analoge Signal rückumgewandelt werden kann, das die Hauptprozessvariable enthält und das dann wiederum an die übergeordneten Einheit übergeben werden kann.

So kann ein Austausch der Hauptprozessvariablen über die entsprechenden D/A- und A/D-Umsetzer 11, 12 erfolgen.

In diesem Beispiel sind zusätzlich noch mit D_IN_Ex und D_OUT beschriftete Pfeile dargestellt, um zu verdeutlichen, dass zusätzlich oder alternativ die Hauptprozessvariablen in digitaler Form ein- oder ausgegeben werden können ("D" steht in diesem Zusammenhang für "Digital"). In diesem Fall werden die Daten der Hauptprozessvariablen nicht über den entsprechenden Wandler geführt, sondern direkt in die entsprechende Signalverarbeitungsmodule dort umgewandelt zu Daten, sodass sie in der Optokoppleranordnung 10 übertragen werden können.

Die Bezeichnungen ADC_INx beziehungsweise DAC_OUTx/ DAC_OUTx_Ref beschreiben die analogen Ein- und Ausgangsignale der Hauptprozessvariablen.

Die Pfeile mit der Bezeichnung "HART" bezeichnen den Austausch des HART Signals, welches vorliegend für die Übertragung der weiteren Daten (Kommunikationsdaten) verwendet wird.

Bei dem vorliegenden Beispiel ist lediglich eine Datenübertragung in Richtung von einem nicht dargestellten Feldgerät zu der übergeordneten Einheit dargestellt. So ist vorliegend nur ein Fluss der Hauptprozessvariablen in dem oberen Teil von Fig. 1 dargestellt, der von dem Feldgerät zur übergeordneten Einheit führt. Es kann auch eine entsprechende Konstruktion gewählt werden, dass auch der Fluss zurück von der übergeordneten Einheit über das Signalübertragungssystem zu dem Feldgerät geführt werden kann

In dem unteren Teil von Fig. 1 ist der Fluss des in den Ansprüchen als sogenannte "weitere Daten" beschriebene Datenteil schematisch gezeigt. Vorliegend handelt es sich um ein Beispiel, bei dem die weiteren Daten im sogenannten HART-Format übertragen werden.

In dem entsprechenden ersten HART-Modul 13 und zweiten HART-Modul 14 ist ein entsprechendes erstes HART-Modem 15 beziehungsweise zweites HART-Modem 16 vorgesehen. Dort wird der entsprechende HART-Datenteil von dem Signal von dem Feldgerät (auf der linken Seite in Fig. 1) beziehungsweise von der übergeordneten Einheit in Fig. 1 rechte Seite abgegriffen. Dieses wird vorliegend in dem entsprechenden HART-Modul in ein TLL-Signal umgewandelt und an die entsprechende Signalverarbeitungsmodule 6,7 übergeben und dann über dessen entsprechenden Optokoppler übertragen.

Der HART-Datenteil kann, wie zuvor für den Stand der Technik beschrieben, von dem analogen Teil, wo die Hauptprozessvariablen geführt sind, überlagert sein und kann somit in dem HART-Modul abgegriffen werden.

Durch den Schritt der Übertragung mittels der Optokoppleranordnung wird eine galvanische Trennung implementiert.

Insbesondere wird dabei ein FSK-Signal (*frequency-shift keying,* Frequenzumtastung) mittels Kondensatoren abgegriffen und über ein HART-Modem in TTL-Signale umgewandelt. Diese werden an einen Mikrokontroller übertragen und von diesem über einen Optokoppler zur galvanischen Trennung an einen zweiten Mikrokontroller übertragen, der die Datenpakete wieder umwandelt in TTL-Pegel und über ein weiteres HART-Modem auf der anderen Seite der galvanischen Trennung wieder über zwei Kondensatoren an einem Shuntwiderstand auf eine Stromschleife als FSK-Signal eingekoppelt.

Um Datenkollisionen zu vermeiden, können dabei die Mikroprozessoren mit einer entsprechenden Verriegelungslogik ausstattet werden und diese Logik kann ebenfalls über die Optokoppler übertragen werden.

Durch Aufteilung des Datenstroms in geeignete Pakete ist die bidirektional zwischen der übergeordneten Einheit (HART-Master) zum Feldgerät (HART-Slave) und umgekehrt möglich.

Im zweiten Schritt kann auch die reine HART-Kommunikation über die gleichen Optokoppler übertragen werden wie die Messdaten.

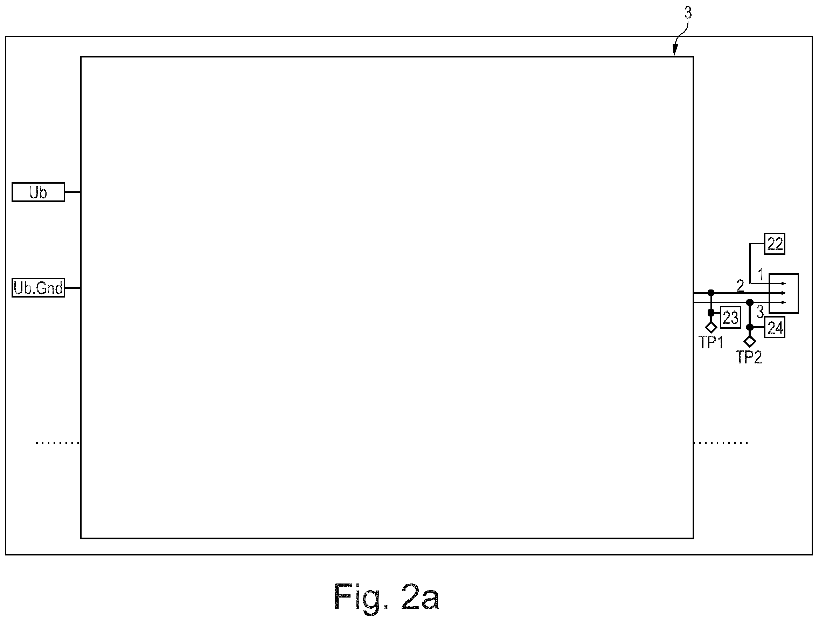

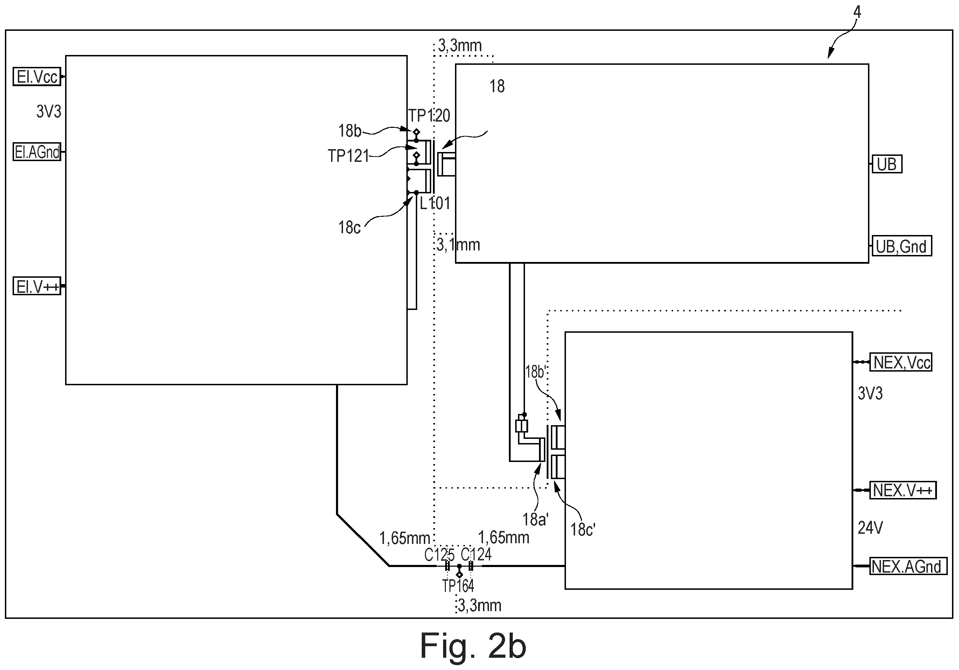

Die entsprechenden Details des Beispiels in Fig. 1 sind in den weiteren Fig. 2 bis 7 dargestellt.

Fig. 2a zeigt schematisch das Leistungsversorgungsmodul 3 an den entsprechenden Anschlüssen UB und UB,Gnd. Auf der linken Seite in Fig. 2a wird die entsprechende Spannung an das Leistungstransfermodul 4, das in Fig. 2b dargestellt ist, übergeben. Die entsprechenden Anschlüsse UB und UB,Gnd sind auf der rechten Seite oben in Fig. 2b dargestellt.

Dort ist ein Eingangsteil mit einer Spulenanordnung 18 mit einer Spule 18a, 18b, 18c und 18a', 18b', 18c' vorgesehen.

Von der Spule 18a wird die Leistung auf die entsprechenden Spulen 18b, 18c übertragen. Von der Spule 18a' wird die Leistung auf die entsprechenden Spulen 18b` und 18c` übertragen. Die Spulen 18b und 18b` gewährleisten eine Übertragung auf ein 3-Volt-System. Die Spulen 18c und 18c' gewährleisten eine Übertragung auf ein 24-Volt-System.

Das 24-Volt-System zeichnet sich jeweils immer durch das Zeichen V++ an dem Abgriff aus (siehe Fig. 2b, linke Seite und rechte Seite). Das 3-Volt-System zeichnet sich immer durch das Zeichen Vcc an dem Abgriff aus (vgl. Fig. 2b,linke Seite und rechte Seite). Die Leitungen entsprechen den Zuleitungen zu den entsprechenden Modulen in Fig. 1. Dort sind in den entsprechenden Anschlussbezeichnungen dieselben.

Somit ist jeweils das 3-Volt und 24-Volt-System an jedes der Module (erstes Signalverarbeitungsmodul, zweites Signalverarbeitungsmodul, erstes Transformationsmodul, zweites Transformationsmodul) angeschlossen. Lediglich an das Optokopplermodul ist nur das 3-Volt-System angeschlossen.

Die Übertragung der Signale zwischen den entsprechenden Modulen ist in Fig. 1 auch schematisch dargestellt. Die Pfeile zeigen hierbei die Richtung an.

Fig. 3 zeigt den Teil des ersten Transformationsmoduls 8 in Fig. 1 auf der linken Seite. In Fig. 3 auf der linken Seite sind die entsprechenden Eingänge von einem Feldgerät dargestellt. In Fig. 3 ist das erste HART-Modem 15 mit der Linie um die entsprechenden elektronischen Elemente abgegrenzt (siehe rechte Seite Fig. 3).

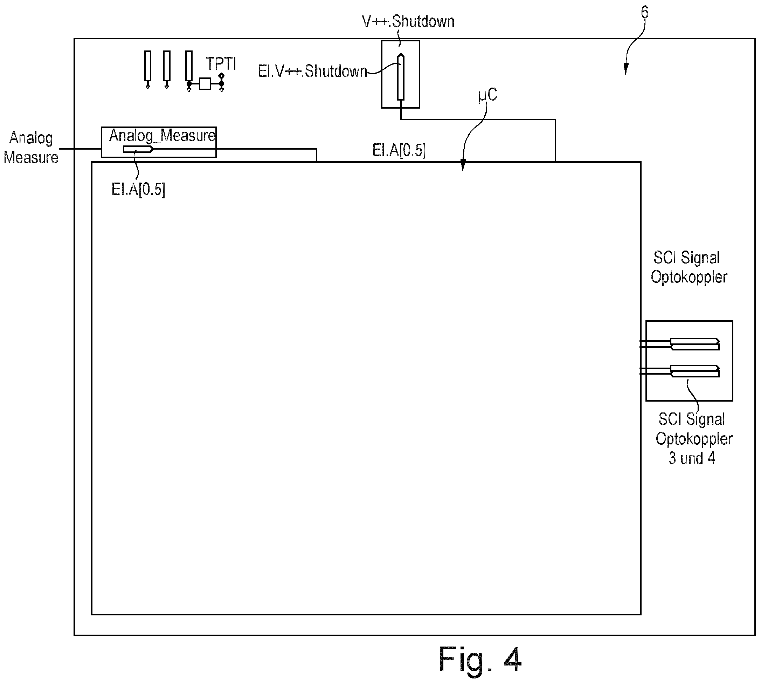

In dem ersten HART-Modem 15 werden der entsprechende HART-Datenteil im HART-Format in ein TLL-Format umgewandelt und dann an das Signalverarbeitungsmodul 6 (vgl. Fig. 4) übertragen. Es ist eine so genannte HART-Anteil-Abtrennanordnung vorgesehen, die dazu eingerichtet ist, den HART-Anteil der Daten von dem Feldgeräteingangssignal abzutrennen. Der HART-Anteil wird dann dem HART-Modem zugeführt und in TLL umgewandelt, um dann dem entsprechenden Signalverarbeitungsmodul zugeführt zu werden.

Ferner ist ein A/D-Umsetzer 11 vorgesehen.

Fig. 1 zeigt auch die Richtung des Signalflusses zwischen den Signalverarbeitungsmodulen und den Transformationsmodulen, wobei die entsprechenden Pfeile die Richtung anzeigen.

In dem in Fig. 4 dargestellten ersten Signalverarbeitungsmodul 6 findet dann die Signalverarbeitung statt und diese umgewandelten Signale werden den entsprechenden Optokopplern zugeführt.

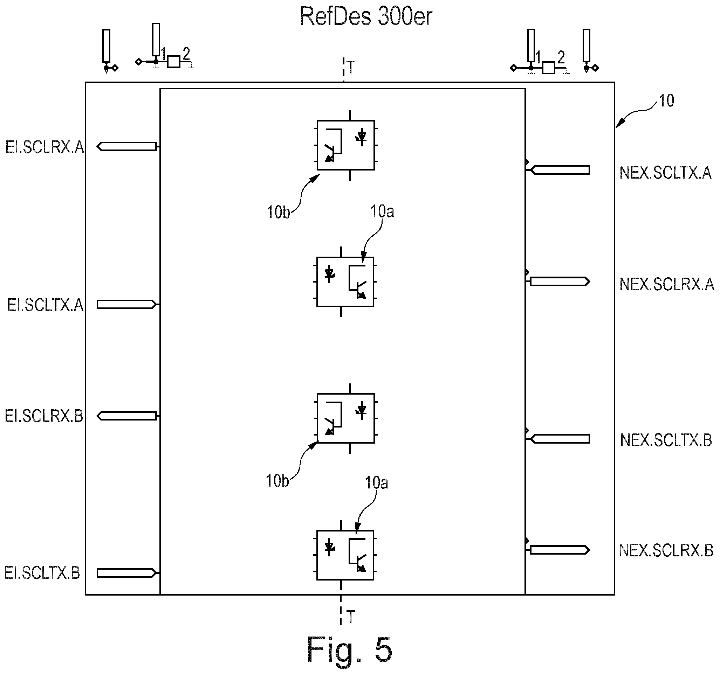

Vorliegend sind vier Optokoppler vorgesehen (vgl. Fig. 5). Die Optokoppler, die von oben nach unten gezählt in der Reihenfolge dem zweiten und vierten Optokoppler entsprechen, sind in eine Richtung geschaltet, sodass eine Übertragung der Signale vom Feldgerät zur übergeordneten Einheit stattfindet. Der erste und dritte von oben gesehene Optokoppler ist in eine Richtung geschaltet, sodass die Signale von der übergeordneten Einheit zu dem Feldgerät geführt werden.

In Fig. 4 ist oben links auch mit der Bezeichnung Analog Measure der Eingang dargestellt, bei dem die entsprechenden analogen Signale ankommen und dann in digitale Signale umgewandelt werden.

Mittels der in den in Figur 5 von oben nach unten gezählt ersten und zweiten Optokoppler werden die entsprechenden digitalisierten Signale, die der Hauptprozessvariablen zugeordnet sind, übertragen. Mittels der in den in Figur 5 von oben nach unten gezählt dritten und vierten Optokoppler werden die entsprechenden weiteren Daten, die das HART-Signal enthalten, übertragen.

Im Wesentlichen ist die elektrische Trennung anhand der in Fig. 5 dargestellten Linie (vgl. Bezugszeichen T) gewährleistet.

Dazu sind zumindest die in Fig. 1 unten dargestellten Module spiegelsymmetrisch vorgesehen.

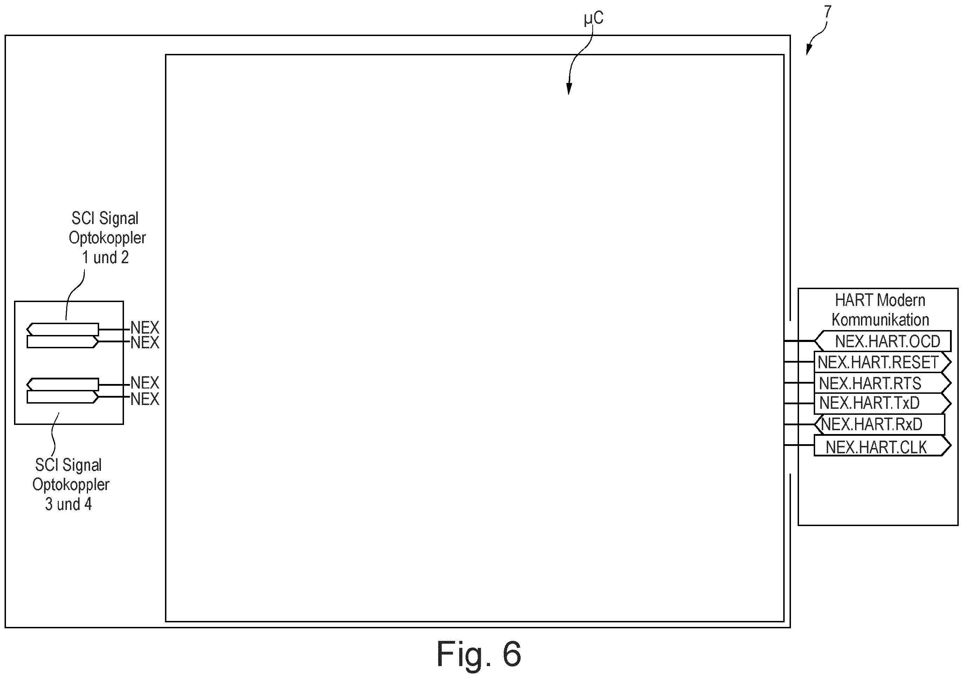

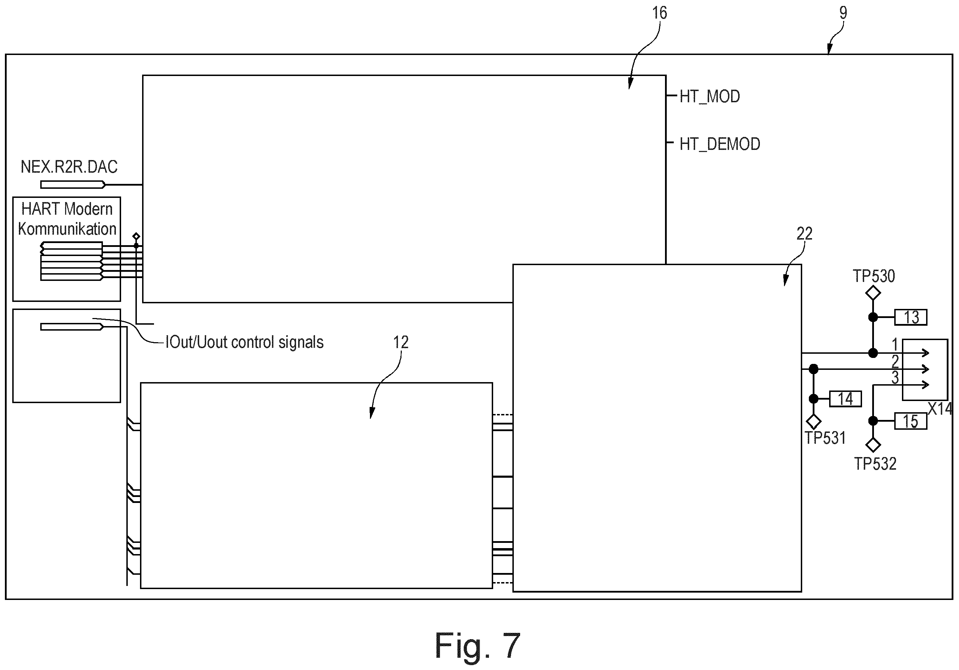

Dementsprechend wird, wie in Fig. 6 dargestellt, aus den entsprechenden Optokopplern das Signal wieder in das zweite Signalverarbeitungsmodul 7 geführt und von dort dann wieder dem zweiten Transformationsmodul 9 zugeführt, welches in Fig. 7 dargestellt ist.

Ferner ist in Fig. 7 ein D/A-Umsetzer 12 vorgesehen.

Von dort werden dann die entsprechenden Signale wieder an die übergeordnete Einheit abgegeben.

Dieses spezielle Ausführungsbeispiel zeigt eine Art wie ein solches Signalübertragungssystem ausgebildet sein kann, die Erfindung ist aber nicht auf dieses spezielle System beschränkt, sondern kann in allen Ausführungsformen, wie sie in der allgemeinen Beschreibung erläutert sind, implementiert werden.

### Bezugszeichenliste

- 1: Signalübertragungseinheit
- 2: Gehäuse
- 3: Leistungsversorgungsmodul
- 4: Leistungstransfermodul
- 6: Erstes Signalverarbeitungsmodul
- 7: Zweites Signalverarbeitungsmodul
- 8: Erstes Transformationsmodul
- 9: Zweites Transformationsmodul
- 10: Optokoppleranordnung
- 10a, 10b: Optokoppler
- 11: A/D-Umsetzer
- 12: D/A-Umsetzer
- 13: Erstes HART Modul
- 14: Zweites HART Modul
- 15: Erstes HART Modem
- 16: Zweites HART Modem
- 18, 18a, 18a', 18b, 18b', 18c, 18c': Spulenanordnung des Leistungstransfermoduls
- 21: Konverter (Input)
- 22: Konverter (Output)
- T: Elektronische Trennung

## Patentansprüche

1. Signalübertragungssystem zur Übertragung einer Hauptprozessvariablen und weiterer Daten zwischen einem Feldgerät und einer übergeordneten Einheit, umfassend:
eine erste Konvertierungsanordnung, eine zweite Konvertierungsanordnung und eine Optokoppleranordnung (10, 10a, 10b), die zwischen der ersten Konvertierungsanordnung und der zweiten Konvertierungsanordnung geschaltet ist,
wobei die erste Konvertierungsanordnung dazu eingerichtet ist, zumindest die zwischen dem Feldgerät und der übergeordneten Einheit ausgetauschten weiteren Daten in ein Datensignal derart zu konvertieren, dass sie über die Optokoppleranordnung (10, 10a, 10b) übertragen werden können;
wobei die Optokoppleranordnung (10, 10a, 10b) eingerichtet ist, das Datensignal zwischen der ersten Konvertierungsanordnung und der zweiten Konvertierungsanordnung zu übertragen;
und wobei die zweite Konvertierungsanordnung dazu eingerichtet ist, das Datensignal zu den zwischen dem Feldgerät und der übergeordneten Einheit ausgetauschten weiteren Daten zu konvertieren und an das Feldgerät zu übertragen.

2. Signalübertragungssystem nach Anspruch 1, **dadurch gekennzeichnet, dass** die weiteren Daten Feldgeräteingangsdaten aufweisen, die von der übergeordneten Einheit an das Feldgerät gesendet werden und/oder Feldgerätausgangsdaten aufweisen, die von dem Feldgerät an die übergeordnete Einheit übertragen werden.

3. Signalübertragungssystem nach Anspruch 1 oder 2, **dadurch gekennzeichnet, dass** die weiteren Daten im HART-Standard übertragen werden.

4. Signalübertragungssystem nach einem der Ansprüche 1 bis 3, **dadurch gekennzeichnet, dass**
die erste Konvertierungsanordnung ein erstes HART Modem (15) umfasst, welches dazu eingerichtet ist, von dem Feldgerät ein Feldgeräteingangssignal zu empfangen, welches die Hauptprozessvariablen und weitere Daten im HART-Standard aufweist, sowie einen HART Datenteil aus dem Feldgeräteingangssignal herauszufiltern und als Datensignal über die Optokoppleranordung (10, 10a, 10b) an die zweite Konvertierungsanordnung zu leiten, wobei die zweite Konvertierungsanordnung ein zweites HART-Modem (16) umfasst, welches dazu eingerichtet ist, das Datensignal wieder zu den weiteren Daten im HART-Standard zu konvertieren; und wobei das zweite HART-Modem (16) dazu eingerichtet ist, den von dem ersten HART Modem (15) herausgefilterten HART-Datenteil nach seiner Konvertierung zu den weiteren Daten im HART-Standard als übergeordnetes Einheitsausgangssignal auszugeben, welches von dem Signalübertragungssystem an die übergeordnete Einheit ausgegeben wird; und/oder
dass die zweite Konvertierungsanordnung ein zweites HART-Modem (16) umfasst, welches dazu eingerichtet ist, von der übergeordneten Einheit ein übergeordnetes Einheitseingangssignal zu empfangen, welches die Hauptprozessvariablen und weitere Daten im HART-Standard aufweist, sowie den HART Datenteil herauszufiltern, und als Datensignal über die Optokoppleranordung (10, 10a, 10b) an die erste Konvertierungsanordnung zu leiten, wobei die erste Konvertierungseinrichtung das erste HART Modem (15) umfasst, welches dazu eingerichtet ist, das Datensignal zu den weiteren Daten im HART-Standard zu konvertieren, und wobei das erste HART-Modem (15) dazu eingerichtet ist, den von dem zweiten HART Modem (16) herausgefilterten HART-Datenteil nach seiner Konvertierung zu den weiteren Daten im HART-Standard als Feldgerätausgangssignal auszugeben.

5. Signalübertragungssystem nach Anspruch 4, **dadurch gekennzeichnet, dass** die jeweilige Konvertierungsanordnung je zumindest eine Signalverarbeitungseinheit (6, 7) aufweist, die jeweils zwischen dem ersten beziehungsweise dem zweiten HART-Modem (15, 16) vorgesehen ist, über welche der HART-Datenteil an die Optokoppleranordung weitergegeben wird, wobei optional
das erste und zweite HART-Modem (15, 16) jeweils derart konfiguriert ist, dass der HART-Datenteil in ein TLL-Signal umgewandelt wird, welches mittels der jeweiligen Signalverarbeitungseinheit (6, 7) derart umgewandelt wird, dass es ein Format aufweist, das über die Optokoppleranordung (10, 10a, 10b) übertragen werden kann.

6. Signalübertragungssystem nach Anspruch 4 oder 5, **dadurch gekennzeichnet, dass** das erste HART-Modem (15) den HART-Datenteil von dem Feldgeräteingangssignal, welches von dem Feldgerät kommend empfangen wird, über eine erste Kondensatoranordnung abgreift und/oder den HART-Datenteil über eine erste Kondensatoranordnung abgibt, um das Feldgerätausgangssignal zu bilden; und/oder
dass das zweite HART-Modem (16) den HART-Datenteil des übergeordneten Einheitseingangssignals, welches von der übergeordneten Einheit kommend empfangen wird, über eine zweite Kondensatoranordnung abgreift und/oder den HART-Datenteil über die zweite Kondensatoranordnung abgibt, um das übergeordnete Einheitsausgangssignal zu bilden.

7. Signalübertragungssystem nach einem der Ansprüche 1 bis 6, **dadurch gekennzeichnet, dass** die Hauptprozessvariablen durch ein analoges Signal zwischen dem Feldgerät und der übergeordneten Einheit übertragen werden, wobei die erste Konvertierungsanordnung einen A/D-Umsetzer (11) aufweist, der dazu eingerichtet ist, das analoge Signal in ein digitales Hauptprozessvariablensignal umzuwandeln, welches innerhalb des Signalübertragungssystems verwendet wird, und wobei die zweite Konvertierungsanordnung einen D/A-Umsetzer (12) aufweist, der dazu eingerichtet ist, das digitale Hauptprozessvariablensignal, welches innerhalb des Signalübertragungssystems verwendet wird, wieder in ein analoges Signal umzuwandeln, wobei optional
der A/D-Umsetzer (11) parallel zu dem ersten HART-Modem (15) vorgesehen ist, und das digitale Hauptprozessvariablensignal des A/D-Umsetzers (11) und der HART-Datenteil des ersten HART-Modems (15) zwischen dem A/D-Umsetzer (11) beziehungsweise dem ersten HART Modem (15) und der Signalverarbeitungseinheit (6) der ersten Konvertierungsanordnung übertragen werden, wobei das von der Signalverarbeitungseinheit (6) der ersten Konvertierungsanordnung verarbeitete digitale Hauptprozessvariablensignal und der HART-Datenteil zwischen der Signalverarbeitungseinheit (6) der ersten Konvertierungsanordnung und der Optokoppleranordnung (10, 10a, 10b) übertragen werden; und/oder wobei optional
der D/A-Umsetzer (12) parallel zu dem zweiten HART-Modem (16) vorgesehen ist, und das digitale Hauptprozessvariablensignal des D/A-Umsetzers (12) und der HART-Datenteil des zweiten HART-Modems (16) zwischen dem D/A-Umsetzer (12) beziehungsweise dem zweiten HART Modem (16) und der Signalverarbeitungseinheit (7) der zweiten Konvertierungsanordnung übertragen werden, wobei das von der Signalverarbeitungseinheit (7) der zweiten Konvertierungsanordnung verarbeitete digitale Hauptprozessvariablensignal und HART Datenteil zwischen der Signalverarbeitungseinheit (7) der zweiten Konvertierungsanordnung und der Optokoppleranordnung (10, 10a, 10b) übertragen werden.

8. Signalübertragungssystem nach Anspruch 6 oder 7, **dadurch gekennzeichnet, dass** die Optokoppleranordung (10, 10a, 10b) zumindest einen HART-Datenteilübertragungsoptokoppler (10a) zur Übertragung des verarbeiteten HART Datenteils und/oder einen Hauptprozessvariablenübertragungsoptokoppler (10b) zur Übertragung des verarbeiteten digitalen Hauptprozessvariablensignals aufweist.

9. Signalübertragungssystem nach einem der Ansprüche 1 bis 8, **dadurch gekennzeichnet, dass** die die Optokoppleranordnung (10, 10a, 10b) für jede Übertragungsrichtung zwischen Feldgerät und der übergeordneten Einheit einen separaten Optokoppler aufweist.

10. Signalübertragungssystem nach einem der Ansprüche 1 bis 9, **dadurch gekennzeichnet, dass** das Signalübertragungssystem derart konfiguriert ist, dass über einen einzigen Optokoppler (10, 10a, 10b) der verarbeitete HART-Datenteil sowie das verarbeiteten digitale Hauptprozessvariablensignal übertragen werden können.

11. Signalübertragungssystem nach einem der Ansprüche 1 bis 10, **dadurch gekennzeichnet, dass** die Hauptprozessvariable zwischen dem Feldgerät und dem Signalübertragungssystem in digitaler Form übertragen wird, und/oder
dass die Hauptprozessvariable zwischen der übergeordneten Einheit und dem Signalübertragungssystem in digitaler Form übertragen wird.

12. Signalübertragungssystem nach einem der Ansprüche 1 bis 11, **dadurch gekennzeichnet, dass** eines oder mehrere der folgenden Elemente a, b, c jeweils als eigenständiges Modul ausgebildet ist, welches über eine Steckverbindung in eine Backplane einer Signalübertragungseinheit eingesteckt werden kann:
a) erste Konvertierungsanordnung;
b) Optokoppleranordnung,
c) zweite Konvertierungsanordnung,
und dass vorzugsweise des Weiteren die jeweilige erste und/oder zweite Konvertierungsanordnung für sich ein Signalverarbeitungseinheitsmodul (6, 7) und ein Transformationsmodul (8, 9) zur Transformation und/oder Aufspaltung der Hauptprozessvariablen und weiterer Daten umfasst.

13. Signalübertragungssystem nach einem der Ansprüche 1 bis 12, **dadurch gekennzeichnet, dass** die erste Konvertierungsanordnung; und zweite Konvertierungsanordnung galvanisch voneinander getrennt sind, und/oder dass
die erste Konvertierungsanordnung; und zweite Konvertierungsanordnung über eine gemeinsame Leistungsversorgungseinrichtung (3) mit Leistung versorgt werden.

14. Signalübertragungssystem nach einem der Ansprüche 1 bis 13, **dadurch gekennzeichnet, dass** das Signalübertragungssystem entlang einer galvanischen Trennung in Richtung der Datenübertragung zwischen dem Feldgerät und der übergeordneten Einheit im Wesentlichen in elektrischer Hinsicht spiegelsymmetrisch ausgebaut ist, wund/oder dass das Signalübertragungssystem für einen eigensicheren Betrieb konfiguriert ist.

15. Verfahren zur Übertragung einer Hauptprozessvariablen und weiterer Daten zwischen einem Feldgerät und einer übergeordneten Einheit, wobei zumindest die zwischen dem Feldgerät und der übergeordneten Einheit ausgetauschten weiteren Daten über eine Optokoppleranordnung übertragen werden.
